Europäisches Patentamt

(19) European Patent Office

Office européen des brevets

(11) Numéro de publication: **0 220 117**
**B1**

(12) # FASCICULE DE BREVET EUROPÉEN

(45) Date de publication du fascicule du brevet: **27.12.89**

(51) Int. Cl.⁴: **G 21 C 19/00,** G 21 C 19/16

(21) Numéro de dépôt: **86402256.1**

(22) Date de dépôt: **10.10.86**

(54) **Machine de manutention d'assemblage combustible nucléaire et procédé de chargement de réacteur en comportant application.**

(30) Priorité: **11.10.85 FR 8515122**

(43) Date de publication de la demande:
**29.04.87 Bulletin 87/18**

(45) Mention de la délivrance du brevet:
**27.12.89 Bulletin 89/52**

(84) Etats contractants désignés:
**BE CH DE ES GB IT LI NL SE**

(56) Documents cité:
**DE-A-1 464 967**
**FR-A-2 184 488**
**FR-A-2 399 098**
**US-A-3 603 634**
**US-A-3 904 048**

(73) Titulaire: **FRAMATOME, Tour Fiat 1, Place de la Coupole, F-92400 Courbevoie (FR)**

(72) Inventeur: **Leclercq, Joseph, 30, route de Champagne, F-69370 Saint Didier au Mont d'Or (FR)**
Inventeur: **Leroux, Jean- Claude, 65, avenue Roger Salengro, F-69100 Villeurbanne (FR)**

(74) Mandataire: **Fort, Jacques, CABINET PLASSERAUD 84, rue d'Amsterdam, F-75009 Paris (FR)**

EP 0 220 117 B1

## Description

L'invention concerne les machines de manutention de combustible nucléaire et les procédés mettant en oeuvre de telles machines. Elle trouve une application particulièrement importante dans le rechargement d'assemblages combustibles nucléaires dans un réacteur après qu'ils aient subi un premier cycle de fonctionnement qui a laissé subsister une teneur de matière fissile suffisante pour qu'ils puissent être réutilisés à un autre emplacement du coeur.

A titre d'exemple d'application, on peut citer les réacteurs à eau sous pression dont le coeur est constitué par juxtaposition d'assemblages combustibles de section carrée, disposés verticalement et côte-à-côte. Un mode d'exploitation avantageux d'un tel réacteur consiste à fractionner le coeur en trois zones d'enrichissement différent (ayant par exemple chacune cinquante-deux assemblages combustibles). Au bout d'un cycle de fonctionnement du réacteur, on retire pour retraitement les assemblages combustibles épuisés dans l'une des zones et on les remplace par des assemblages provenant d'une autre zone. Les assemblages retirés de cette seconde zone sont remplacés par d'autres assemblages ayant subi un seul cycle de fonctionnement en réacteur. Et, enfin, la troisième zone est chargée en assemblages neufs. Les transferts d'assemblages combustibles irradiés s'effectuent alors que le réacteur est arrêté et froid, que le couvercle de sa cuve est enlevé et que le niveau de l'eau boriquée dans une piscine entourant le réacteur a été amené à une hauteur suffisante pour assurer la protection biologique et l'évacuation de la chaleur résiduelle émise par les assemblages.

Ce mode d'exploitation permet d'optimiser le cycle de combustible. Le rechargement peut s'effectuer avec contrôle visuel ou à l'aide de caméras immergées. Généralement, l'opération de rechargement est effectuée avec une machine de manutention du type comprenant une plate-forme déplaçable horizontalement et portant un mât vertical télescopique dont la partie basse est terminée par une pince de préhension de la pièce d'extrémité supérieure de l'assemblage..

Lorsque les assemblages combustibles sont de grande longueur, ce qui est le cas le plus fréquent à l'heure actuelle, l'insertion d'un assemblage de combustible irradié se heurte au problème des déformations que peut avoir subies cet assemblage lors de son premier passage en réacteur. A titre indicatif, un assemblage combustible ayant une longueur de 4 m et une section carrée de 214 mm de côté, subit sous irradiation un allongement des gaines qui peut conduire à un flambage axial se traduisant par un déport de 20 mm. L'insertion de la pièce d'extrémité inférieure de l'assemblage dans les pions de centrage classiquement prévus sur la plaque support de coeur du réacteur constitue alors une opération délicate. Dans la pratique, on amène l'assemblage à insérer contre un assemblage déjà en place et on le descend lentement pour réduire les frottements tout en vérifiant visuellement qu'il n'y a pas accrochage entre grilles adjacentes. Si on constate que l'inclinaison que prend l'assemblage à la suite de son déport est trop importante, on le retourne autour d'un axe vertical afin de présenter la face opposée. Toutes ces opérations allongent la durée de rechargement et sont source d'incidents.

L'invention vise à fournir une machine de manutention permettant d'accélérer notablement l'opération de rechargement. Pour cela, l'invention propose une machine du type ci-dessus défini, caractérisée en ce que le mât porte au moins un (et habituellement plusieurs) éléments rigides verticaux terminés par un patin destiné à prendre appui latéralement sur une face de la partie inférieure de l'assemblage suspendu à la pince, chaque élément étant escamotable indépendamment.

Grâce au patin, ou aux patins, de guidage, la pièce d'extrémité inférieure de l'assemblage est guidée lors de sa descente dans le coeur. On ne place un patin que sur chacun des côtés où il n'y a pas d'assemblages adjacents déjà en place. Dans le cas où les assemblages ont une section carrée, on prévoira quatre patins, portés chacun par une tige rigide.

L'escamotage des patins et des tiges qui les portent peut s'effectuer de diverses façons. Par exemple, chaque tige peut être munie d'organes démontables de fixation rapide sur la partie basse du bras télescopique. Ou chaque tige est portée par la partie basse du mât de façon à pouvoir coulisser par rapport à lui entre deux positions extrêmes, l'une dans laquelle le patin est au-dessus du niveau de la pièce d'extrémité supérieure de l'assemblage suspendu à la pince, l'autre dans laquelle le patin descend jusqu'à la pièce d'extrémité inférieure de l'assemblage.

Dans une variante de réalisation, l'élément rigide est constitué par un organe rigide présentant un encombrement en plan correspondant à celui d'un assemblage, muni de moyens permettant de le saisir à l'aide de ladite pince et des pions inférieurs destinés à s'engager dans des trous d'entrée d'eau d'une plaque support de coeur d'un réacteur, et présentant au moins une face latérale inclinée constituant patin d'appui glissant pour l'assemblage.

L'invention propose également un procédé de chargement d'assemblage de combustible nucléaire dans un réacteur, caractérisé en ce que, pour amener l'assemblage en un emplacement du coeur adjacent à un emplacement déjà occupé, on place un patin contre chaque face de l'assemblage autre que celle (ou que chacune de celles) qui est occupée, on descend à vitesse élevée l'assemblage vers un emplacement écarté de son emplacement définitif jusqu'à proximité de sa position horizontale définitive, on déplace latéralement l'assemblage à insérer jusqu'à son emplacement définitif et on effectue la descente finale de l'assemblage jusqu'à sa position horizontale définitive.

L'invention sera mieux comprise à la lecture de la description qui suit d'un mode particulier de réalisation, donné à titre d'exemple non limitatif. La description se réfère aux dessins qui l'accompagnent, dans lesquels:

- la Figure 1 est un schéma de principe, en élévation, montrant la constitution d'une machine de manutention constituant un exemple de réalisation;
- les Figures 2, 3 et 4 sont des schémas de principe en vue de dessus, montrant diverses situations qui peuvent se présenter lors du rechargement d'un assemblage combustible;
- les Figures 5 et 6 sont des schémas en élévation montrant la cinématique de mise en place d'un assemblage à l'aide de la machine de la Figure 1;
- la Figure 7 est une vue en élévation à grande échelle montrant un élément rigide suivant une variante de réalisation;
- la Figure 8 est un schéma en élévation montrant la mise en oeuvre de la variante de la Figure 7;
- les Figures 9, 10 et 11 montrent une autre variante encore, respectivement en élévation, en vue de gauche et en vue de dessus.

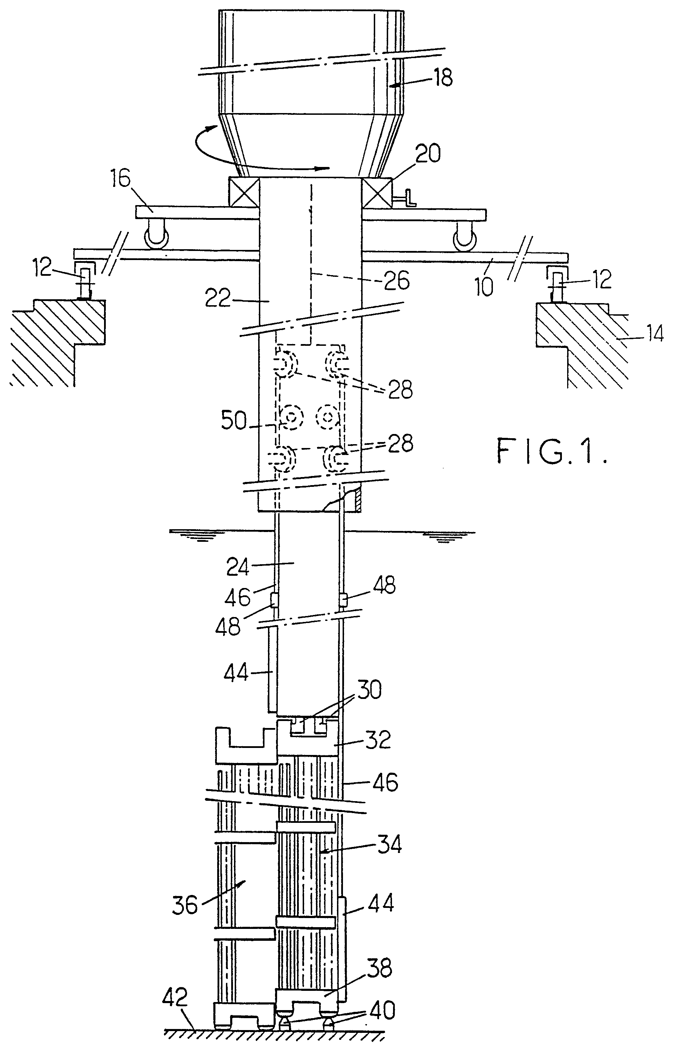

La machine schématisée en Figure 1 (où l'échelle n'est pas respectée pour plus de clarté) présente une constitution générale classique. Elle comporte une passerelle 10 munie de roues 12 de circulation sur des rails portés par la margelle 14 de la piscine dans laquelle est placée la cuve (non représentée) contenant le coeur du réacteur. La passerelle porte elle-même des rails de circulation d'un chariot 16 dans une direction orthogonale à la direction de déplacement de la passerelle. Le chariot 16 porte un mât vertical 18 par l'intermédiaire d'un mécanisme 20 d'entraînement en rotation autour de l'axe du mât. Ce dernier présente un fût 22 solidaire du chariot pour ce qui est de sa position verticale et portant divers organes de commande et de contrôle, notamment un treuil (non représenté) de manutention d'un tube télescopique 24 constituant la partie basse du mât. La Figure 1 montre schématiquement un câble 26 auquel est suspendu le mât. Ce dernier est guidé à l'intérieur du fût 22 par des moyens schématisés sous forme de galets 28 placés à différents niveaux. Ces galets peuvent être également prévus pour solidariser en rotation le tube 24 du fût 22.

Le tube 24 est muni, à son extrémité basse, d'une pince dont seuls les mors, 30, sont représentés. Ces mors permettent de saisir la pièce d'extrémité supérieure 32 d'un assemblage combustible 34 à insérer dans le coeur, contre un assemblage combustible adjacent 36 déjà en place. Au cours de la phase finale de l'insertion de l'assemblage 34, sa pièce d'extrémité inférieure 38 doit s'engager sur des pions de centrage 40 portés par la plaque support de coeur 42.

La machine dont la constitution générale vient d'être décrite est relativement classique. Elle permet notamment de saisir et de déplacer verticalement et horizontalement des assemblages combustibles 34 ayant une section carrée. Elle est associée à divers organes de mesure et de commande de déplacement et à des organes de visualisation tels que des caméras de télévision mobiles.

La machine suivant l'invention représentée en Figure 1 comporte de plus des moyens de guidage comprenant quatre organes destinés chacun à coopérer avec une face de l'assemblage 34. Chaque organe comporte un patin 44 présentant une forme telle qu'il puisse prendre appui sur la partie basse d'un assemblage 34. Dans la pratique, ce patin aura une forme de plaque de largeur légèrement inférieure à celle d'un des côtés de l'assemblage, destinée à venir s'appuyer sur la pièce d'extrémité inférieure 38 et une fraction du faisceau de crayons de combustible. Le patin 44 est fixé à une tige de déplacement 46 de section telle qu'elle présente une résistance notable à la flexion. Cette tige peut notamment avoir une forme de profilé et être maintenue appliquée contre le tube télescopique 24 par des guides 48.

Chaque organe de guidage doit pouvoir occuper la position active dans laquelle il est montré à la partie droite de l'assemblage 34 sur la Figure 1 et une position escamotée, permettant d'amener l'assemblage 34 en position adjacente à un assemblage 36 déjà en place. Ce résultat peut être obtenu en munissant la tige 46 de moyens de fixation rapide sur le tube télescopique 24. On peut également, comme cela est montré schématiquement sur la Figure 1, munir chaque tige 46 d'un mécanisme permettant de la déplacer par rapport au tube 24 entre la position basse montrée à droite de l'assemblage 34 et la position haute montrée à gauche de l'assemblage 34. Ces mécanismes peuvent être constitués par un ensemble pignon-crémaillère 50 ou par tout autre mécanisme verrouillable à commande électrique ou à pression de fluide.

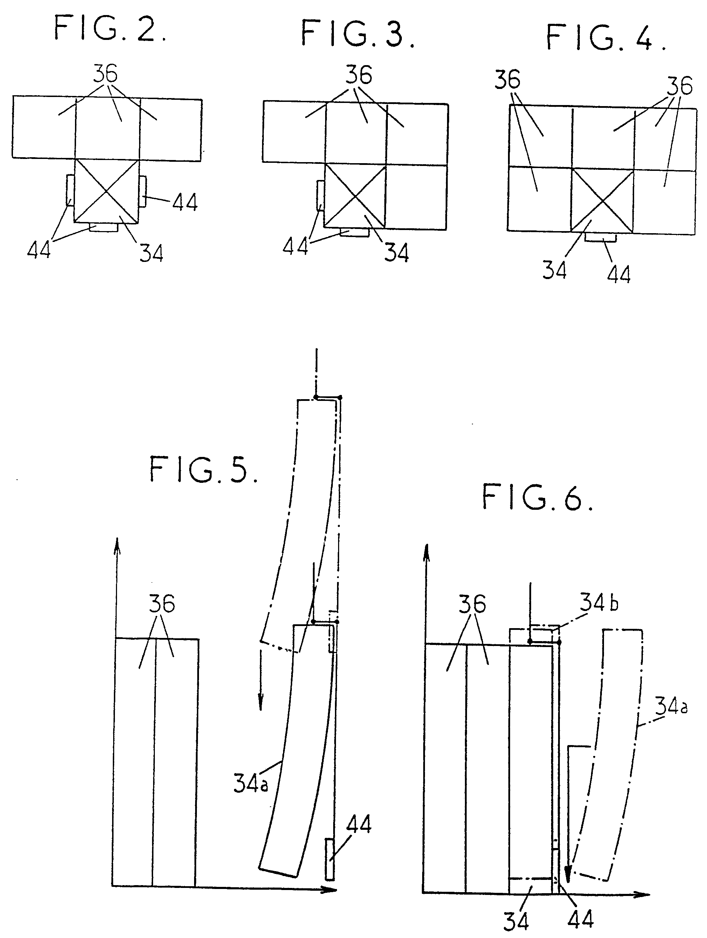

La mise en oeuvre du procédé à l'aide de la machine qui vient d'être décrite implique la mise en position active d'un nombre de patins différent suivant le nombre d'emplacements adjacents à celui de l'assemblage 34 à insérer qui sont déjà occupés par d'autres assemblages 36 en place. Dans le cas où trois faces de l'assemblage restent libres (Fig. 2), trois patins sur quatre peuvent être utilisés pour guider l'assemblage. Lorsque l'assemblage 34 doit être inséré dans un dièdre laissé libre par les assemblages en place 36, deux faces seulement sont libres et peuvent être munies de patins 44 (Figure 3). Enfin, lorsque l'assemblage 34 doit être inséré dans un emplacement accessible d'un seul côté, un seul patin 44 sera mis en position active (Figure 4).

La séquence des opérations à effectuer reste cependant la même dans tous les cas (hormis celui où l'on devrait insérer un assemblage entre huit assemblages en place). On descend tout d'abord l'assemblage suspendu au mât télescopique dans une position décalée par rapport aux assemblages déjà en place 36 afin d'éviter tout risque d'interférence avec ces derniers. Cette descente, jusqu'à la position 34a montrée en Figure 5, peut s'effectuer à grande vitesse. La hauteur de l'assemblage dans la position 34a est choisie de façon que la pièce d'extrémité inférieure soit au-dessus des pions de centrage équipant la plaque support de coeur.

On amène ensuite l'assemblage, par déplacement latéral, dans la position 34b directement au-dessus de l'emplacement final qu'il doit occuper. Au cours de ce déplacement transversal, la partie basse de l'assemblage vient s'appliquer contre le patin 44 si elle en était initialement écartée (position 34b sur la Figure 6). L'insertion est alors terminée par descente du tube télescopique à vitesse faible par rapport à la vitesse initiale de descente jusqu'à la position 34, en surveillant l'opération d'engagement dans les pions de centrage.

Dans la pratique, le gain de temps sur l'insertion d'un assemblage placé dans une position du genre montré en Figure 2 ou en Figure 3 est de l'ordre d'un facteur 5. Le gain est plus réduit dans le cas de la disposition montrée en Figure 4, du fait qu'on ne dispose de patins de centrage que d'un seul côté et qu'on se heurte aux problèmes habituels pour ce qui est des décentrements éventuels dans la direction perpendiculaire à celle dans laquelle le patin peut exercer une force de centrage.

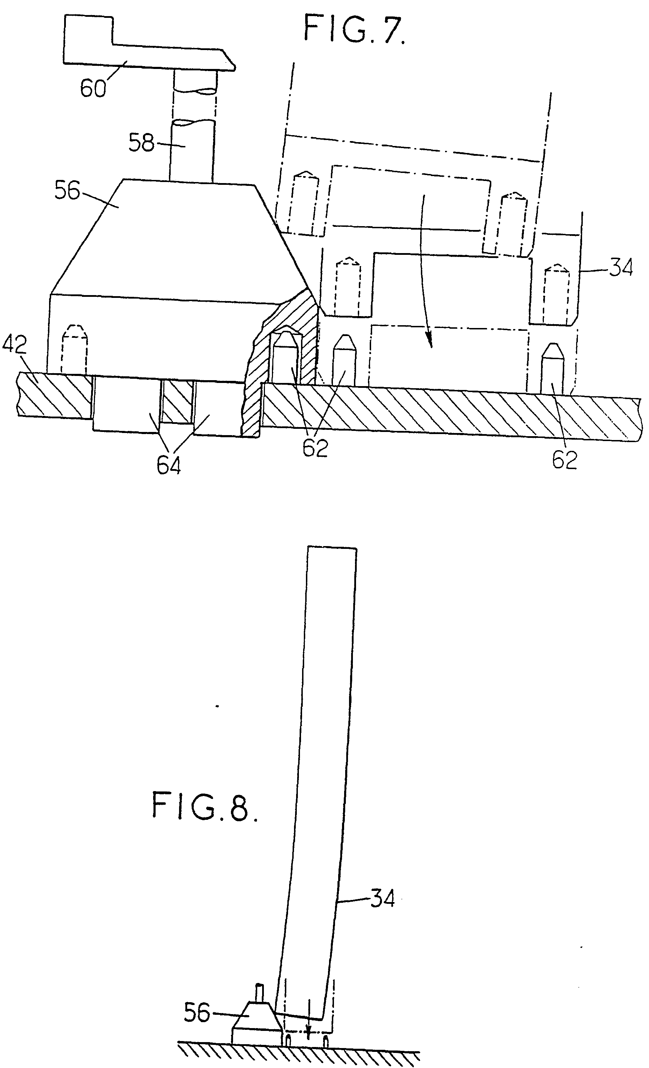

Dans la variante de réalisation montrée en Figures 7 et 8, l'élément rigide est constitué par un organe manutentionnable à l'aide du mât et destiné à être déposé à un emplacement adjacent à celui que doit occuper l'assemblage à insérer. La Figure 7 montre un organe ayant un socle 56 en forme de tronc de pyramide prolongé vers le bas par une portion ayant un encombrement en plan identique à celui d'un assemblage. Ce socle 56 est fixé à une tige 58 terminée par une tate 60 de préhension. Des trous borgnes sont ménagés dans le socle pour recevoir les doigts de centrage d'assemblage 62 classiquement prévus sur la plaque support de coeur 42 des réacteurs. De façon que les efforts latéraux de guidage ne soient pas encaissés par ces pions, le socle 56 porte également des tenons 64 qui viennent s'engager dans les trous d'entrée d'eau prévus pour les assemblages.

On voit qu'en plaçant un organe (ou plusieurs) à un emplacement adjacent à celui qui doit occuper un assemblage 34 à mettre en place, et à condition que la pointe de la pyramide soit suffisante (60° au moins en général), on guide l'assemblage 34 hors de sa descente et on l'amène à son emplacement correct, comme cela apparaît sur les Figures 7 et 8.

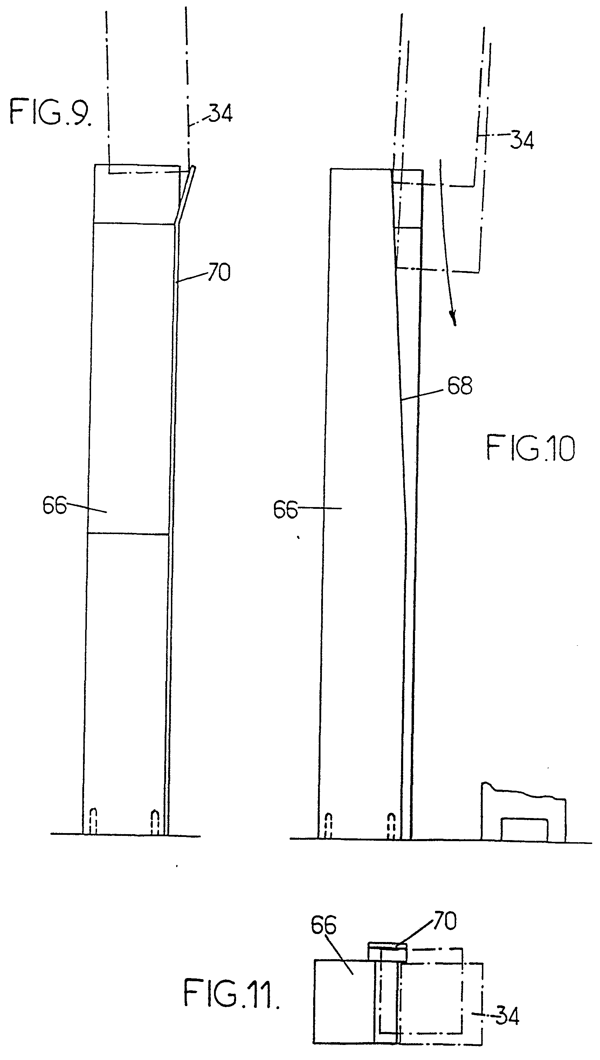

Dans la variante des Figures 9 à 11, l'organe rigide constitue un assemblage postiche encore muni de trous borgnes et de tenons (non représentés). L'organe comporte un corps 66 dont la face 68, adjacente à l'emplacement qui doit recevoir l'assemblage 34 à insérer, constitue une rampe oblique. Sur une face adjacente à la rampe 68 est fixé un guide convergent 70.

L'invention est susceptible de nombreuses autres variantes d'exécution et elle peut s'appliquer à des assemblages de combustible ayant une rectrain autre que carrée, et en particulier ceux ayant une rectrain hexagonale.

## Revendications

1. Machine de manutention d'assemblages combustibles d'un réacteur nucléaire comprenant une plate-forme (16) déplaçable horizontalement et portant un mât vertical télescopique (18, 22, 24) dont la partie basse (24) est terminée par une pince (30) de préhension de la pièce d'extrémité supérieure (32) de l'assemblage, caractérisée en ce que le mât porte au moins un élément rigide vertical (44, 46; 56, 58, 60, 66) terminé par un patin (44), le patin ou chaque patin étant destiné à prendre appui latéralement sur une face de la partie inférieure de l'assemblage suspendu à la pince, chaque élément étant escamotable indépendamment.

2. Machine selon la revendication 1, caractérisée en ce que le mât porte plusieurs éléments rigides et en ce que chaque élément rigide est muni d'organes démontables de fixation rapide sur ladite partie basse.

3. Machine selon la revendication 1, caractérisée en ce que chaque élément rigide est déplaçable par rapport à la partie basse (24) du mât entre une position inférieure active et une position haute où le patin (44) est à un niveau supérieur à celui de la pièce d'extrémité supérieure (32).

4. Machine selon la revendication 3, caractérisée en ce que chaque élément est muni d'un mécanisme (50) actionnable indépendamment de déplacement entre la position basse et la position haute.

5. Machine selon l'une quelconque des revendications 1 à 4, caractérisée en ce que le mât comporte un fût (22) monté sur la plate-forme (16) de façon à pouvoir tourner et un tube télescopique (24) solidaire en rotation du fût et déplaçable verticalement dans des moyens de guidage portés par le fût, constituant ladite partie basse.

6. Machine selon la revendication 1, caractérisée en ce que ledit élément rigide est constitué par un organe rigide (56, 66) présentant un encombrement en plan correspondant à celui d'un assemblage, muni de moyens (58, 60) permettant de le saisir à l'aide de ladite pince, et des tenons inférieurs (64) destinés à s'engager dans des trous d'entrée d'eau d'une plaque support de coeur (42) d'un réacteur, et présentant au moins une face latérale inclinée constituant patin d'appui glissant pour l'assemblage.

7. Machine selon la revendication 6, caractérisée en ce que ledit organe (56) comporte un socle présentant une base de forme pyramidale.

7

8. Machine selon la revendication 6, *caractérisée* en ce que ledit organe (66) constitue un assemblage postiche dont une face (68) au moins, destinée à être placée face à l'emplacement d'un assemblage à insérer, est inclinée sur sensiblement toute sa hauteur.

9. Machine selon la revendication 8, *caractérisée* en ce que ledit organe (66) porte un guide d'entrée (70) sur une face adjacente à la face inclinée.

10. Procédé de chargement d'assemblage combustible nucléaire dans un réacteur, *caractérisé* en ce que, pour amener l'assemblage en un emplacement du coeur adjacent à un emplacement déjà occupé, on place un patin contre chaque face de l'assemblage autre que celle (ou que chacune de celles) qui est occupée, on descend à vitesse élevée l'assemblage vers un emplacement écarté de son emplacement définitif jusqu'à proximité de sa position horizontale définitive, on déplace latéralement l'assemblage à insérer jusqu'à son emplacement définitif et on effectue la descente finale de l'assemblage jusqu'à sa position horizontale définitive.

Claims

1. A machine for handling fuel assemblies of a nuclear reactor comprising a platform (16) which is horizontally movable and carries a telescopic vertical mast (18, 22, 24) whose lower part (24) ends with a gripper (30) for gripping the upper end piece (32) of the assembly, *characterized* in that the mast carries at least one vertical rigid element (44, 46; 56, 58, 60, 66) ending in a shoe (44), the shoe or each shoe being arranged for laterally bearing on one face of the lower part of the assembly suspended from the gripper, each element being independently retractable.

2. Machine according to claim 1, *characterized* in that the mast carries a plurality of rigid elements and in that each rigid element is provided with disconnectable means for rapid connection to said lower part.

3. Machine according to claim 1, *characterized* in that each rigid element is movable with respect to the lower part (24) of the mast between an active low position and a high position where the shoe (44) is at a level higher than that of the upper end piece (32).

4. Machine according to claim 3, *characterized* in that each element is provided with an independently actuatable mechanism (50) for movement between the low position and the high position.

5. Machine according to any one of claims 1 - 4, *characterized* in that the mast includes a barrel (22) mounted on the platform (16) for rotation and

8

a telescopic tube (24) non-rotatably connected to the barrel and vertically movable in guide means carried by the barrel, forming said lower part.

6. Machine according to claim 1, *characterized* in that said rigid element is formed as a rigid member (56, 66) having a cross-section corresponding to that of an assembly, provided with means (58, 60) for seizing it with said gripper and lower lugs (64) for engagement into water inlet holes of a core support plate (42) of the reactor and having at least one slanting lateral face forming a sliding bearing shoe for the assembly.

7. Machine according to claim 6, *characterized* in that said member (56) includes a pedestal having a base of pyramidal shape.

8. Machine according to claim 6, *characterized* in that said member constitutes a dummy assembly one face (68) at least of which, arranged to be placed facing the position of an assembly to be inserted, is slanted over substantially the whole of its height.

9. Machine according to claim 8, *characterized* in that said member (66) carries an inlet guide (70) on a face adjacent the slanting face.

10. Method of loading a nuclear fuel assembly into a reactor, *characterized* in that, for bringing the assembly to a position in the core adjacent a position already occupied, a shoe is placed against each face of the assembly other than that (or than each of those) which is occupied, the assembly is lowered at high speed to a position remote from its final position until it is close to its final horizontal position, the assembly to be inserted is moved laterally as far as its final position and the assembly is finally lowered until it reaches its final horizontal position.

Patentansprüche

1. Maschine zur Beladung von Brennstabanordnungen eines Nuklearreaktors, die eine horizontal verschiebbare Plattform (16) aufweist und einen vertikalen Teleskopmast (18, 22, 24) trägt, dessen unterer Bereich (24) von einem Greifelement (30) zum Greifen des oberen Endstücks (32) der Anordnung begrenzt ist, *dadurch gekennzeichnet*, daß der Mast wenigstens ein durch einen Gleitschuh (44) begrenztes starres vertikales Element (44, 46, 56, 58, 60, 66) trägt, wobei der Gleitschuh oder jeder Gleitschuh zur seitlichen Abstützung auf einer Fläche des unteren Bereichs der am Greifelement aufgehängten Anordnung dient, wobei jedes Element unabhängig einziehbar ist.

2. Maschine nach Anspruch 1, *dadurch gekennzeichnet*, daß der Mast mehrere starre Elemente trägt, und daß jedes starre Element mit abnehmbaren Elementen zur schnellen Fixierung am unteren Bereich versehen ist.

3. Maschine nach Anspruch 1, *dadurch gekennzeichnet,* daß jedes starre Element im Verhältnis zum unteren Bereich (24) des Mastes zwischen einer unteren aktiven Position und einer hohen Position verschiebbar ist, wo das Gleitstück (44) sich auf einem höheren Niveau als das obere Endstück (32) befindet.

4. Maschine nach Anspruch 3, *dadurch gekennzeichnet,* daß jedes Element mit einem Mechanismus (50) versehen ist, der unabhängig von der Verschiebung zwischen der unteren und der hohen Position betätigbar ist.

5. Maschine nach einem der Ansprüche 1 bis 4, *dadurch gekennzeichnet,* daß der Mast einen Rahmen (22), der auf der Plattform (16) drehbar befestigt ist, und ein Teleskoprohr (24) aufweist, das drehfest mit dem Rahmen verbunden und vertikal in die Führungselemente verschiebbar ist, die vom Rahmen getragen sind und den unteren Bereich bilden.

6. Maschine nach Anspruch 1, *dadurch gekennzeichnet,* daß das starre Element von einem starren Glied (56, 66) gebildet ist, das einen der Anordnung in der Ebene entsprechenden Raumbedarf aufweist und mit Einrichtungen (58, 60), die mit Hilfe des Greifelementes ein Greifen der Anordnung ermöglichen, und mit unteren Zapfen (64) versehen ist, welche in die Wassereintrittslöcher einer Stützplatte des Kerns (42) des Reaktors eingreifbar sind und wenigstens eine abgeschrägte Seitenfläche aufweisen, welche eine Gleitstütze für die Anordnung bilden.

7. Maschine nach Anspruch 6, *dadurch gekennzeichnet,* daß das Glied (56) einen Sockel mit einer pyramidenförmigen Basis aufweist.

8. Maschine nach Anspruch 6, *dadurch gekennzeichnet,* daß das Glied (66) etwa die Form einer Anordnung aufeist, von der wenigstens eine Fläche (68), die dazu bestimmt ist, gegenüberliegend zur Einbaustelle einer Anordnung angeordnet zu werden, über ihrer gesamten Höhe leicht abgeschrägt ist.

9. Maschine nach Anspruch 8, *dadurch gekennzeichnet,* daß das Glied (66) eine Eingangsführung (70) auf einer zur abgeschrägten Fläche benachbarten Fläche trägt.

10. Verfahren zur Beladung einer nuklearen Brenstoffanordnung in einem Reaktor, *dadurch gekennzeichnet,* daß zur Zuführung der Anordnung in eine Einbaustelle des Kerns benachbart zu einer bereits belegten Einbaustelle man einen Gleitschuh gegen jede Fläche der Anordnung außer derjenigen oder jeder derjenigen, die besetzt ist, setzt, man die Anordnung mit erhöhter Geschwindigkeit in eine Einbaustelle, die gegenüber ihrer endgültigen Einbaustelle seitlich verschoben ist, bis in die Nähe ihrer endgültigen horizontalen Lage hinabläßt, man die Anordnung zur Einführung in ihre endgültige Einbaustelle seitlich verschiebt, und man die endgültige Absenkung der Anordnung bis in ihre endgültige horizontale Stellung bewirkt.

EP 0 220 117 B1

FIG.1.

# FIG. 2.

36

44

44        34

# FIG. 3.

36

44        34

# FIG. 4.

36                36

34        44

# FIG.5.

36

34a

44

# FIG.6.

36                34b

34a

34        44

FIG.7.

FIG.8.

FIG.9.

34

70

66

FIG.10

34

68

66

66

70

FIG.11.

34